(19) Europäisches Patentamt
European Patent Office
Office européen des brevets

(11) Numéro de publication : **0 531 492 B1**

(12) # FASCICULE DE BREVET EUROPEEN

(45) Date de publication du fascicule du brevet : **04.10.95 Bulletin 95/40**

(51) Int. Cl.[6] : **H01M 6/18,** H01B 1/12, C08K 5/00, C08K 3/16

(21) Numéro de dépôt : **92907207.2**

(22) Date de dépôt : **04.03.92**

(86) Numéro de dépôt international : **PCT/FR92/00198**

(87) Numéro de publication internationale : **WO 92/16028 17.09.92 Gazette 92/24**

(54) **MATERIAUX POLYMERIQUES A CONDUCTION IONIQUE.**

(30) Priorité : **07.03.91 FR 9102715**

(43) Date de publication de la demande : **17.03.93 Bulletin 93/11**

(45) Mention de la délivrance du brevet : **04.10.95 Bulletin 95/40**

(84) Etats contractants désignés : **AT BE CH DE DK ES FR GB GR IT LI LU MC NL SE**

(56) Documents cités :
**EP-A- 0 095 982**
**CHEMICAL ABSTRACTS, vol. 74, 1971, Columbus, Ohio, US; abstract no. 18734E, FALICHEVA A. I. ET AL: 'Cathode Polarization in Sulfate Electrolytes of Various Modification Compositions' page 418 ;colonne 1 ;**

(73) Titulaire : **CENTRE NATIONAL DE LA RECHERCHE SCIENTIFIQUE (CNRS)**
**13 Quai Anatole France**
**F-75700 Paris (FR)**
Titulaire : **HYDRO-QUEBEC**
**455 René-Levesque Blvd. West - 1700**
**Montréal, Québec H2Z 1Z2 (CA)**

(72) Inventeur : **ARMAND, Michel**
**"Les Corjons"**
**F-38410 Saint-Martin-d'Uriage (FR)**
Inventeur : **SANCHEZ, Jean-Yves**
**781, chemin de Chartreuse**
**F-38330 Saint-Ismier (FR)**
Inventeur : **DEROO, Daniel**
**22, rue Claude-Kogan**
**F-38000 Grenoble (FR)**

(74) Mandataire : **Sueur, Yvette**
**Cabinet SUEUR & L'HELGOUALCH,**
**78, Rue Carnot**
**F-95240 Cormeilles-en-Parisis (FR)**

**EP 0 531 492 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des matériaux polymériques à conduction ionique, leur préparation et leur utilisation comme électrolyte solide.

Les sels métalliques $MX_n$ dans lesquels M représente un cation métallique et X représente un anion monovalent, forment des complexes avec certains polymères solvatants, en particulier ceux incorporant des séquences de type polyéther (par exemple le poly(éthylène oxyde) PEO, le poly(propylène oxyde) PPO, le poly(bis ω-méthoxy-oligooxyéthylène-phosphazène) $ME_nP$) ou les polyamines (PEI). Ces matériaux possèdent, dans une plage de température et de concentration en sel déterminée, une conduction ionique qui peut être utilisée pour la réalisation de systèmes électrochimiques, en particulier des accumulateurs (Brevet Européen N° 13199).

La conductivité ionique de ces complexes dépend du degré de dissociation du sel $MX_n$ et les valeurs les plus élevées pour une espèce M donnée sont obtenues avec des anions $X^-$ pour lesquels la charge négative est délocalisée et qui ne possèdent aucun caractère complexant. Cependant la mobilité des cations $M^{n+}$ dans ce milieu macromoléculaire dépend de la vitesse d'échange des ligands incorporés à la trame macromoléculaire, sous forme d'unités de solvatation, autour de ces cations. Pour n > 1 et/ou pour les éléments de transition, cette cinétique est lente et entraîne en général des valeurs faibles ou nulle du nombre de transport cationique dans ces matériaux. En particulier, il est donc difficile d'effectuer des réactions électrochimiques impliquant un apport réversible à l'électrode de l'espèce $M^{n+}$ (dépôt métallique-dissolution, insertion...).

La présente invention a pour but de remédier à ces inconvénients en fournissant des matériaux du type polymère-sel dans lesquels le transport de l'espèce M est indépendant de la dissociation du sel $MX_n$ en anions et cations $M^{n+}$.

Les matériaux à conduction ionique de la présente invention, comprenant une solution solide d'un ou plusieurs sels dans un polymère, sont caractérisés en ce que le transport et la mobilité d'un cation métallique $M^{n+}$ ayant la valence n, $1 \leqq n \leqq 5$, sont assurés par au moins un anion complexe, correspondant à la formule générale $[MZ_nY_p]^{p-}$ formé entre un ligand anionique $Z^-$, un ligand anionique $Y^-$ et le cation $M^{n+}$, avec $1 \leqq p \leqq 3$.

Parmi les matériaux à conduction ionique de la présente invention, on peut citer les complexes polymères représentés par la formule globale

$$Poly(u.s.)_u\, A(M_xZ_zY_y)$$

dans laquelle

- A est un cation de valence p susceptible d'être facilement solvaté par le polymère, avec p=1, 2 ou 3
- (u.s.) désigne l'unité de solvatation du polymère
- u représente le nombre d'unités de solvatation portées par la trame polymère assurant la solvatation d'un cation A.
- x, y et z sont tels que la relation z + y - nx = p soit satisfaite et qu'ils permettent la coexistence en quantités finies, de l'anion complexe $[MZ_nY_p]^{p-}$ et d'une espèce choisie dans le groupe constitué par l'anion $Z^-$, l'anion $Y^-$, l'anion complexe $[MZ_nY_{p+1}]^{(p+1)-}$ et l'espèce neutre $MZ_n$.

Le transport de l'espèce $M^{n+}$ est donc assuré par diffusion du complexe anionique $[MZ_nY_p]^{p-}$ jusqu'à l'électrode. A l'électrode, le complexe perd du métal M qui se dépose sur l'électrode. Parallèlement, l'anion complexe est reformé à partir de $MZ_n$ ou bien sa charge est augmentée, ou bien le ligand $Y^-$ et/ou le ligand $Z^-$ sont libérés par désolvatation des anions complexes. L'anion complexe ayant une charge augmentée ou $Y^-$ ou $Z^-$ migrent vers l'électrode opposée. Le phénomène s'inverse si le sens du courant est inversé.

La mobilité relativement importante des espèces anioniques dans les polymères solvatants permet d'assurer une cinétique rapide pour le mécanisme précité.

Le cation A susceptible d'être facilement solvaté par le polymère peut être choisi parmi les métaux alcalins, les métaux alcalino-terreux, le lanthane, les radicaux ammonium quaternaire, les radicaux amidinium, les radicaux guanidinium. Parmi les groupes ammonium quaternaire, on peut citer ceux qui répondent à la formule $NH_{(4-j)}R_j^+$. Parmi les groupes amidinium, on peut citer ceux qui répondent à la formule $RC(NH_{2-j}R_j)_2^+$. Parmi les groupes guanidinium, on peut citer ceux qui répondent à la formule $C(NH_{2-j}R_j)_3^+$. Dans tous les cas, R peut être l'hydrogène, un groupement alkyle, oxaalkyle ou aryle, et j peut prendre les valeurs entières 0,1 ou 2. Les cations A préférés de l'invention sont ceux qui, en raison de leur rayon ionique élevé, assurent la meilleure dissociation ionique des complexes et pour lesquels le ligand $Z^-$ ne possède pas de pouvoir complexant. A cet égard, les ions $K^+$, $Cs^+$, $Sr^+$, $Ba^{++}$ et $NH_4^+$ sont particulièrement préférés.

M peut être choisi parmi les métaux dont la valence n est de 1 à 5. Comme exemples, on peut citer les métaux alcalins et les métaux alcalino-terreux ayant un rayon ionique suffisamment petit pour pouvoir être aisément complexés, les métaux de transition et les terres rares. On préfère tout particulièrement Li, Mg, Ca, Sr, Mn, Fe, Ni, Co, Cu(I, II) Ag, Zn, Cd, Al, Sn(II, IV), Bi, Hg, Pb, Y, La.

$Z^-$ et $Y^-$, identiques ou différents, peuvent être choisis parmi:

= les halogènes tels que $F^-$, $Cl^-$, $Br^-$, $I^-$;

= les pseudohalogènes répondant à la formule $QS^-$ ;

= les radicaux $R_FCO_2^-$, $(R_FCO)_2N^-$, $(R_FCO)_2CQ^-$, $R_FCOCQ_2^-$, $QCOC(CN)_2^-$,$(R_FCO)_2CSO_2R_F^-$,$(R_FCO)_2C SO_2NR_2^-$,$R\text{-}(OCH_2CH_2)_j\text{-}CH_2COC(CN)_2^-$;

= les sulfonamides tels que $QN(SO_2R_F)^-$ ;

Q représentant CN, R, RCO, $R_2NCO$, $R_2NCS$, $R_F$, $R_FCO$ ou un hétérocycle, $R_F$ représentant un radical perhalogénoalkyle ou perhalogénoaryle, R représentant un groupement alkyle, oxaalkyle ou aryle .

Z et Y peuvent aussi représenter, simultanément ou non, un biradical ou plus généralement un multiradical, par exemple $-(R_FSO_2)NQ'N(SO_2R_F)-$, Q' représentant un radical divalent possédant des fonctionalités similaires à celles de Q et $R_F$ ayant la signification donnée ci-dessus.

Les polymères utilisables pour le matériau de la présente invention sont ceux qui comportent sur la trame polymère, des unités de solvatation qui contiennent au moins un hétéroatome tel que O, N, F, S.
Parmi ces polymères, on peut citer ceux pour lesquels l'unité de solvatation de la trame polymère est un groupement éther ou un groupement amine.
Lorsque les unités de solvatation sont des groupements éther, la trame polymère peut être constituée par un homo-polymère, un copolymère bloc, un copolymère statistique, un copolymère alterné ou un copolymère de structure peigne de l'oxyde d'éthylène. Lorsqu'il s'agit d'un homopolymère, la trame polymère est avantageusement constituée par du poly(oxyde d'éthylène). Parmi les copolymères, on peut citer un copolymère de l'oxyde d'éthylène avec un éther cyclique choisi parmi l'oxyde de propylène, le méthylglycidyléther, l'allylglycidyléther, le dioxolane.
Une autre famille de polymères intéressants est constituée par ceux dont la trame polymère est constituée par un poly-[alcoxy(oligoéthylèneoxy)phosphazène], par un poly[alcoxyoligoéthylèneoxy)siloxane] ou par un poly[alcoxy(oligoéthylèneoxy) vinyl éther].

Les matériaux selon l'invention sont préparés en dissolvant dans un polymère solvatant, un sel $AY_p$ et un sel $MZ_n$, les proportions respectives des constituants du mélange étant telles que la relation $z + y - nx = p$ soit satisfaite et qu'elles permettent la coexistence en quantités finies, de l'anion complexe $[MZ_nY_p]^{p-}$ et d'une espèce choisie dans le groupe constitué par l'anion $Z^-$, l'anion $Y^-$, l'anion complexe $[MZ_nY_{p+1}]^{(p+1)-}$ et l'espèce neutre $MZ_n$.

La dissolution du sel dans le polymère peut être effectuée en dissolvant les sels et le polymère dans un solvant liquide commun, puis en évaporant le dit solvant. Suivant les constituants utilisés, on obtient soit une matière plastique filmogène, soit une matière visqueuse.
Le polymère peut être réticulé. Si on utilise un polymère pré-réticulé, le composé ionique est dissous dans un solvant, le polymère pré-réticulé est imprégné par la solution obtenue, puis le solvant est éliminé. Le polymère peut également être réticulé in situ. La réticulation de la trame polymère peut être effectuée, par exemple par action d'une source de radicaux libres, de rayonnements ionisants ou d'un acide au sens de Lewis. La trame polymère peut également être réticulée par polycondensation d'un oligo(oxyde d'éthylène) di- ou tri-fonctionnel, dont les extrémités sont des fonctions alcool ou amine, sur un isocyanate de fonctionnalité au moins égale à 2.

La dissolution des sels peut également être effectuée en mélangeant à sec le polymère et les sels sous forme de poudre, par exemple dans un broyeur à galets. Le pressage du mélange broyé permet d'obtenir le matériau sous forme de film.

Divers additifs utilisés classiquement pour les matériaux à conduction ionique peuvent être ajoutés au mélange, pour modifier les propriétés du matériau final. Ainsi, on peut incorporer à la trame polymère un agent plastifiant tel que le carbonate d'éthylène, le carbonate de propylène, la $\gamma$-butyrolactone, la diméthylformamide, la N-méthylpyrrolidone, les tétraalkylsulfamides, les polyéthylènes glycols de masse comprise entre 200 et 2000 ou leurs éthers méthyliques et, d'une manière générale, les dérivés de molécules polaires de faible volatilité. La proportion de ces additifs peut aller de 1 à 90% de la masse totale.

On peut également ajouter un ou plusieurs sels d'un anion qui ne peut constituer un ligand du cation M, par exemple pour augmenter la conductivité du matériau ou pour augmenter son caractère amorphe. Parmi ces sels, on peut citer les sels AX, A ayant la signification donnée ci-dessus, X étant un anion délocalisé tel que le perchlorate, le trifluorométhanesulfonate, le bis trifluorométhanesulfonylimidure.

L'obtention du matériau selon l'invention sous forme de film est particulièrement avantageuse pour certaines applications.

Les matériaux de la présente invention peuvent être utilisés pour des générateurs électrochimiques. De tels générateurs comportent une électrode négative "source" du métal M à un haut potentiel chimique, une électrode positive ou "puits" établissant un bas potentiel chimique de M, les deux électrodes étant en contact par l'intermédiaire d'un électrolyte polymère constitué par un matériau selon l'invention. Avantageusement,

l'une au moins des électrodes a une structure composite incluant le matériau électrochimiquement actif, un matériau conducteur électronique et le matériau selon la présente invention.
Le matériau conducteur électronique peut être le graphite ou un noir de carbone, particulièrement le noir d'acétylène.
L'électrode négative est constituée de préférence par du zinc métallique, du magnésium métallique, du lithium métallique ou l'un de ses alliages, du calcium ou de l'aluminium.

Les matériaux de la présente invention peuvent également être utilisés pour un système électrochimique permettant d'agir sur la transmission de la lumière. Un tel système comprend une contre-électrode, un électrolyte constitué par un matériau selon l'invention et une électrode transparente. Cette électrode peut servir de substrat pour le dépôt électrochimique de M ou de support à une couche électrochrome. Dans un tel système, la contre-électrode est formée par une grille du métal M, éventuellement déposé sur un support transparent. Elle peut aussi être constituée par un matériau électroactif déposé sur un support transparent, le matériau électroactif étant choisi parmi ceux qui ne subissent pas de variation de couleur lors de la réaction électrochimique, ou parmi ceux qui présentent une variation de couleurs concomitante à celle de l'électrode transparente. Le métal M est avantageusement choisi parmi le cuivre, le zinc, le nickel, l'étain, le plomb.

Les matériaux de la présente invention sont décrits plus en détails dans les exemples suivants, donnés à titre illustratif, non limitatif.

**Exemple 1**

792 mg de poly(oxyde d'éthylène) PEO de masse $5.10^6$ g/mole, 166 mg d'iodure de potassium et 19 mg d'iodure de cuivre sont dissous sous agitation dans 30 ml d'acétonitrile. La solution homogène obtenue est versée dans un anneau de verre de 5 cm de diamètre, posé sur une plaque de PTFE. Après évaporation du solvant, on obtient un film élastique de couleur jaune d'environ 25 $\mu$m d'épaisseur. La variation de la conductivité ionique de ce matériau en fonction de la température est représentée sur la figure 1, lors d'une montée en température (courbe a) et lors d'un refroidissement (courbe b).

**Exemple 2**

3,96 g de poly(oxyde d'éthylène) PEO de masse $9.10^5$g/mole, 745 mg de chlorure de potassium et 1,09 g de chlorure de zinc sont dissous sous agitation dans 25 ml de formiate de méthyle. La solution homogène obtenue, qui contient les anions complexes $ZnCl_3^-$ et $ZnCl_4^{2-}$, est épandue à l'aide d'un gabarit sur une plaque de polypropylène. Après évaporation du solvant, on obtient un film élastique transparent d'environ 100 $\mu$m d'épaisseur. La variation de la conductivité ionique de ce matériau en fonction de la température est représentée sur la figure 2 lors d'un refroidissement (courbe a) et lors d'une montée en température (courbe b).

**Exemple 3**

2,83 g de poly(méthoxy-éthoxy-éthoxyphosphazène préparé selon la méthode décrite par : H.R. Allcock, P.E. Austin, T.X. Neenan, J.T. Sisko, P.M. Blonsky & D.F. Shriver, Macromolecules <u>19</u>, 1508 (1986), 382 mg de chlorure de guanidinium et 272 mg de chlorure de zinc sont dissous sous agitation dans 20 ml d'acétone. La solution homogène obtenue est évaporée. On obtient un matériau très visqueux transparent. La conductivité, mesurée à 22°C, est supérieure à $5.10^{-5}$ $(\Omega cm)^{-1}$.

**Exemple 4**

2,1 g de polyéthylène glycol 400-co-oxyméthylène de masse $\cong 10^5$ g/mole ont été préparés selon la méthode décrite dans : C.V. Nicholas, D.J. Wilson, C. Booth & R.J.M. Giles Brit. Polym. J. <u>20</u> 289 (1988). 760 mg de trifluoroacétate de potassium et 1,16 g de trifluoroacétate de zinc sont dissous sous agitation dans 20 ml d'acétonitrile. La solution homogène obtenue, qui contient les ions $CF_3CO_2^-$ et $[(CF_3CO_2)_3Zn]^-$, est évaporée dans les conditions de l'exemple 1. On obtient un film transparent très collant. La conductivité mesurée à 22°C est supérieure à $7.10^{-5}$ $(\Omega cm)^{-1}$.

**Exemple 5**

5,28 g de poly(oxyde d'éthylène) PEO de masse $5.10^6$g/mole, 1,03 g de bromure de sodium et 1,33 g de bromure d'aluminium anhydre sont mélangés à sec dans un broyeur à boulets de zircone. La poudre obtenue est pressée à 80°C sous 400 bars dans un moule étanche. On obtient un film blanc semi-cristallin d'environ

50 μm d'épaisseur qui est conservé dans une boîte à gants sous atmosphère sèche (<1vpm).

**Exemple 6**

4 g de poly(oxyde d'éthylène) PEO-triol de masse 3080 g/mole de la firme Daiichi Kogyo Seiyaku Co, 372 mg de chlorure de potassium et 552 mg de chlorure de cobalt anhydre sont mélangés avec 4 ml d'acétonitrile. Après dissolution, on ajoute 327 mg d'hexaméthylène di-isocyanate et une goutte de dilaurate de dibutylétain (catalyseur). La solution bleue obtenue est coulée dans un moule formé par deux plaques de polypropylène séparées de 0,8 mm et d'un joint sur 3 cotés. Après 72 heures, le réseau polymère obtenu par la réaction de polycondensation est démoulé et l'acétonitrile est évaporé dans un courant d'azote sec. On obtient une membrane élastique qui a de très bonnes propriétés mécaniques et dont la conductivité est, à 50°C, de $3.10^{-5}$ $(\Omega cm)^{-1}$, dans laquelle coexistent les ions $CoCl_3^-$ et $CoCl_4^{2-}$.

**Exemple 7**

Le sel de césium de la bis(trifluoroacétyl)imide est préparé par réaction de $(CF_3CO)_2NH$ sur un excès de carbonate de césium dans l'acétonitrile. Après évaporation, le sel est extrait par le formiate de méthyle et cristallisé. A 5,11 g du sel de césium en solution dans 20 ml de tétrahydrofurane, on ajoute 423 mg de chlorure de lithium anhydre ; il se forme un précipité de CsCl qui est séparé par centrifugation. 10 ml de la solution surnageante sont ajoutés à 6,6 g d'un terpolymère d'oxyde d'éthylène (80%), de méthyl-glycidyl éther (15%) et d'allyl-glycidyl éther (5%) de masse $\overline{M}_w \cong 2{,}5.10^5$ en solution dans l'acétonitrile. A la solution est ajouté 1% en poids par rapport au polymère de peroxyde de benzoyle. Un film de complexe polymère-sel, qui contient un mélange de $(CF_3CO)_2N^-$ et de $[(CF_3CO)_2N_2Li]^-$, est épandu à l'aide d'un gabarit pour correspondre à une épaisseur de 40 μm après évaporation du solvant. Le film sec est chauffé sous atmosphère d'argon sec à 80°C pendant 3h. Il se produit une réticulation des chaînes du polymère par les doubles liaisons du groupement allyle, amorcée par le peroxyde. Le film obtenu a d'excellentes propriétés mécaniques et sa conductivité est de $7.10^{-5}$ $(\Omega cm)^{-1}$ à 26°C.

**Exemple 8**

484 mg de poly(oxyde d'éthylène) PEO de masse $5.10^6$ g/mole, 246 mg de trifluoroacétate de césium et 71 mg de trifluoroacétate de nickel sont dissous sous agitation dans 15 ml d'acétonitrile. La formation du complexe $Ni(CF_3CO_2)_3^-$ est mise en évidence par sa coloration verte intense. La solution homogène obtenue est versée dans un anneau de verre de 4 cm de diamètre posé sur une plaque de PTFE. Après évaporation du solvant, on obtient un film élastique d'environ 25 μm d'épaisseur.

**Exemple 9**

1,4 g de poly(méthoxy-éthoxy-éthoxy)phosphazène préparé selon la méthode décrite par : H.R. Allcock, P.E. Austin, T.X. Neenan, J.T. Sisko,, P.M. Blonsky & D.F. Shriver, Macromolecules 19, 1508 (1986), 378 mg de chlorure d'étain anhydre et 168 mg de bromure de césium sont dissous sous agitation dans 20 ml de formiate de méthyle. La solution homogène obtenue est évaporée. On obtient un matériau très visqueux transparent qui contient l'anion $SnCl_2Br^-$ et le sel neutre $SnCl_2$ solvaté par le polymère.

La conductivité, mesurée à 22°C, est supérieure à $5.10^{-5}$ $(\Omega cm)^{-1}$.

**Exemple 10**

900 mg de copolymère de l'exemple 7, 152 mg de trifluoroacétate de potassium, 125 mg de trifluoroacétate de magnésium et 20 mg d'acide azobis(cyanovalérique) sont dissous dans 10 ml d'acétonitrile. L'évaporation de la solution dans un anneau de verre sur PTFE et un chauffage sous argon à 80°C produisent un film élastique dont la conductivité est de $5.10^{-4}$ $(\Omega cm)^{-1}$ à 55°C. Dans ce matériau coexistent les sels $K^+CF_3CO_2^-$ et $K^+[(CF_3CO_2)_3Mg]^-$.

**Exemple 11**

440 mg de poly(oxyde d'éthylène) PEO de masse $5.10^6$ g/mole, 660 mg de bis(trifluoroacétyl imidure) de magnésium et 152 mg de fluorure de césium sont dissous sous agitation dans 15 ml d'acétonitrile. Cette composition correspond à la coexistence des complexes $\{Mg[(CF_3CO)_2N]_2\}_2F^-$ et $Mg[(CF_3CO)_2N]_2F^-$. La solu-

tion homogène obtenue est versée dans un anneau de verre de diamètre 4 cm posé sur une plaque de PTFE. Après évaporation du solvant, on obtient un film élastique d'environ 25 μm d'épaisseur.

**Exemple 12**

Le composé $CH_3OCH_2CH_2NH(SO_2CF_3)$ est préparé par réaction du trifluorométhane-sulfonyl imidazole sur la méthoxyéthylamine. Le composé est distillé sous pression réduite après acidification par l'acide chlorhydrique. A 1,2 g de ce composé sont ajoutés 2 ml d'une solution 0,5M de méthyl carbonate de magnésium dans le méthanol et 277 mg de carbonate de potassium. La solution résultante est filtrée et évaporée. 342 mg de complexe et 396 mg de poly(oxyde d'éthylène) de masse $\overline{M}_w \cong 5.10^6$ sont dissous dans 20 ml d'acétonitrile. Le mélange homogène est versé dans un anneau de verre posé sur une plaque de PTFE poli. Après évaporation, on obtient un film de 55 μm d'épaisseur dont la conductivité à 60°C est de $4.10^{-4}$ $(\Omega cm)^{-1}$.

**Exemple 13**

L'acide 2-méthoxytétrafluoropropionique est préparé selon la méthode décrite dans J. Org. Chem 31 2312, (1966) à partir de l'oxyde d'hexafluoropropène. 5,25 g de cet acide sont traités par 3,5 g d'hydrogénocarbonate de potassium dans 10 ml d'eau. Après réaction, l'eau est évaporée sous pression réduite et le résidu solide est extrait par 20 ml de formiate de méthyle. Après évaporation de la solution organique on obtient le sel $K[CH_3OCF(CF_3)CO_2]$. 4,26 g de ce sel sont dissous dans 15 nl d'acétonitrile et on ajoute 300 mg de chlorure de magnésium anhydre. Le précipité de KCl est éliminé par centrifugation et La solution surnageante est mélangée à 15 g de poly(oxyde d'éthylène) de masse $9.10^5$ g/mole dans 200 ml d'acétonitrile. La solution est dégazée et coulée sur une plaque de verre. Après évaporation et séchage, on obtient un film de 70 μm d'épaisseur dont la conductivité à 80°C est de $2.10^{-3}$ $(\Omega cm)^{-1}$.

**Exemple 14**

L'acide trifluoroacétyle tétronique :

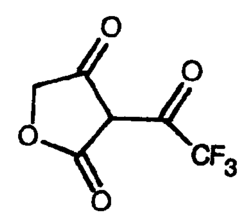

est préparé en condensant le chlorure de trifluoroacétyle sur le sel de potassium de l'acide tétronique en présence de pyridine. A 2,24 g du sel de potassium de l'acide trifluoroacétyle tétrolique dans 20 ml d'acétonitrile sont ajoutés 105 mg de chlorure de lithium anhydre. Le précipité de chlorure de potassium est séparé, puis la solution surnageante est mélangée à 3,3 g de polyéthylène glycol 400-co-oxyméthylène de masse $\cong 10^5$ g/mole dans 30 ml de tétrahydrofurane. Le polymère a été préparé selon la méthode décrite dans : C.V. Nicholas, D.J. Wilson, C. Booth & R.J.M. Giles Brit. Polym. J. 20 289 (1988). La solution est dégazée et coulée sur une plaque de verre. Après évaporation et séchage, on obtient un film de 95 μm d'épaisseur dont la conductivité à 68°C est de $9.10^{-4}$ $(\Omega cm)^{-1}$.

**Exemple 15**

On a reproduit le mode opératoire de l'exemple 14 en remplaçant l'acide trifluoroacétyle tétronique successivement par chacun des acides suivants :

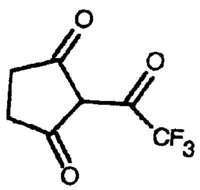

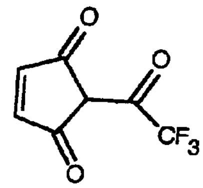

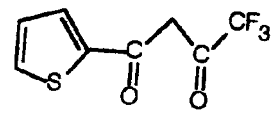

La conductivité des films obtenus était supérieure à $10^{-4}$ $(\Omega cm)^{-1}$ à 70°C.

**Exemple 16**

Le sel $K^+CH_3\text{-}OCH_2COC(CN)_2^-$ est préparé par action du chlorure de méthoxyacétyle sur le dérivé potassique du malononitrile $K^+HC(CN)_2$ dans la pyridine, puis traitement par le carbonate de potassium. A 1,76 g de ce sel dans 10 ml d'acétonitrile sont ajoutés 430 mg de chlorure d'europium anhydre. Le précipité de KCl est éliminé par centrifugation et on ajoute 2,2 g de copolymère statistique oxyde d'éthylène (80%) - méthylglycidyl éther (20%). Après évaporation, on obtient dans les conditions de l'exemple 1, un film d'électrolyte polymère contenant le métal de terre rare sous forme de complexe anionique $EuZ_3^-$ avec Z = $CH_3\text{-}OCH_2COC(CN)_2$.

**Exemple 17**

Un générateur électrochimique secondaire comporte une électrode négative constituée par une feuille de zinc de 20 µm d'épaisseur, découpée sous forme d'un disque de 3 cm de diamètre; un électrolyte constitué par le matériau polymère selon l'exemple 2 ; une électrode positive ayant une structure de composite obtenu par évaporation d'une suspension contenant 580 mg du matériau de l'électrolyte, 965 mg de poly dimercaptothiadiazole de formule :

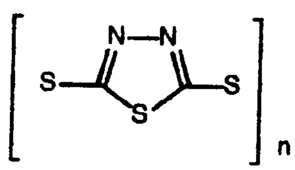

et 150 mg de noir d'acétylène. L'ensemble forme un film de 125 µm d'épaisseur sur un collecteur en polypropylène (12 µm) métallisé par une couche de molybdène d'environ 200 nm. L'ensemble est découpé au même diamètre. Les trois éléments sont pressés ensemble à 90°C sous $2.10^5$Pa. A 70°C, la f.e.m. de la batterie ainsi constituée est de 1,15 Volts et sa capacité sous 50 $\mu A/cm^2$ jusqu'à la tension de coupure de 0,8 V est de 8 $C/cm^2$. Ce générateur est rechargeable.

**Exemple 18**

Un générateur secondaire est fabriqué avec la chaîne électrochimique suivante :

| | | |
|---|---|---|
| Mg | électrolyte : matériau selon l'invention avec M = Mg | composite / fluorure de graphite - électrolyte - noir d'acétylène |

L'électrolyte est celui décrit à l'exemple 11. La composition de l'électrode positive correspond à 42% v/v d'électrolyte, 8% v/v de noir d'acétylène et 50% v/v de fluorure de graphite $CF_x$ ($x \cong 1$). Le matériau composite dilué dans l'acétonitrile est épandu sur une feuille de cuivre de 8 µm de manière à former une couche d'environ 80 µm d'épaisseur. L'électrode négative est une feuille de 20 µm. La tension de la batterie après assemblage par laminage des éléments à 80°C est de 2,5 V et la capacité pour un débit de 300 $\mu A/cm^2$ est de 7 $mAh/cm^2$.

**Exemple 19**

Un générateur électrochimique comprend une électrode négative constitué d'une feuille de lithium de 25 $\mu m$ d'épaisseur, d'un électrolyte préparé selon l'exemple 7 et d'une électrode composite dont le matériau actif est l'oxyde de vanadium $V_2O_5$ (55% v/v), de noir d'acétylène (6% v/v) et du même électrolyte. L'épaisseur de l'électrode positive est de 45 $\mu m$. La capacité est de 8 Coulombs/$cm^2$ pour une tension de coupure de 2,2 Volts.

**Exemple 20**

Un dispositif de vitrage à transmission variable est construit de la manière suivante: sur une plaque de verre recouverte d'une couche d'oxyde d'indium dopé (ITO) de manière à obtenir une résistance de 10 $\Omega$ carré, on dépose une couche de l'électrolyte polymère décrit à l'exemple 1. La contre électrode est formée par un dépôt de 1 $\mu m$ de cuivre métallique sur une autre plaque de verre de taille semblable. La couche continue est transformée par photogravure en une grille à mailles carrées de 15 $\mu m$ de coté et d'épaisseur 2 $\mu m$. L'assemblage a lieu sous vide à 80°C avec l'application d'une force mécanique de $4{,}9.10^5$ Pa (5 kg/$cm^2$). Par application d'une tension de 1 Volt entre la grille métallique et la couche d'ITO (pôle-), on observe l'apparition d'un dépôt réfléchissant de cuivre. Par inversion des polarités, la transparence du système est rétablie en quelques secondes.

**Exemple 21**

Un dispositif flexible à transmission optique contrôlée électriquement est construit de la manière suivante : sur un film de poly(éthylène téréphtalate) (PET) recouvert par pulvérisation cathodique d'une couche d'oxyde d'étain dopé au fluor ($SnO_2$/F) de manière à obtenir une résistance de 50 $\Omega$ carré, on dépose une couche de l'électrolyte polymère décrit à l'exemple 9. La contre électrode est formée par un dépôt de 1 $\mu m$ d'étain métallique sur un film de PET. La couche continue est transformée par photogravure en une grille à mailles carrées de 15 $\mu m$ de coté et d'épaisseur 2 $\mu m$. L'assemblage a lieu sous vide à 80°C par laminage des éléments. Par application d'une tension de 0,8 Volt entre la grille métallique et la couche d'ITO (pôle-), on observe l'apparition d'un dépôt réfléchissant d'étain. Par inversion des polarités, la transparence du système est rétablie en $\cong$ 1 minute.

**Revendications**

1. Matériau à conduction ionique comprenant une solution solide d'un ou plusieurs sels dans un polymère, caractérisé en ce que le transport et la mobilité d'un cation métallique $M^{n+}$ ayant la valence n sont assurés par au moins un anion complexe correspondant à la formule générale $[MZ_nY_p]^{p-}$, formé entre un ligand anionique $Z^-$, un ligand anionique $Y^-$ et le cation $M^{n+}$, avec $1 \leqq n \leqq 5$ et $1 \leqq p \leqq 3$.

2. Matériau selon la revendication 1, caractérisé en ce que la solution solide est un complexe polymère représenté par la formule globale

$$Poly(u.s.)_u\ A(M_xZ_zY_y)$$

dans laquelle
- A est un cation de valence p susceptible d'être facilement solvaté par le polymère, avec p=1 ou 2;
- (u.s.) désigne l'unité de solvatation du polymère;
- u représente le nombre d'unités de solvatation portées par la trame macromoléculaire nécessaires pour solvater un cation A;
- x, y et z sont tels que la relation z + y - nx = p soit satisfaite et qu'ils permettent la coexistence en quantités finies, de l'anion complexe $(MZ_nY_p)^{p-}$ et d'une espèce choisie dans le groupe constitué par l'anion $Z^-$, l'anion $Y^-$, l'anion complexe $[MZ_nY_{p+1}]^{(p+1)-}$, l'anion complexe $(MZ_{n+1}Y_p)^{(p+1)-}$ et l'espèce neutre $MZ_n$.

3. Matériau selon la revendication 2, caractérisé en ce que le cation A est choisi parmi les métaux alcalins, les métaux alcalino-terreux, les radicaux ammonium quaternaire répondant à la formule $NH_{(4-j)}R_j^+$, les radicaux amidinium répondant à la formule $RC(NH_{2-j}R_j)_2^+$, les radicaux guanidinium répond à la formule $C(NH_{2-j}R_j)_3^+$, avec j = 0, 1 ou 2, R étant choisi parmi l'hydrogène, un groupement alkyle, oxaalkyle ou aryle.

4. Matériau selon l'une quelconque des revendications 1 à 3, caractérisé en ce que le cation $M^{n+}$ est un cation

dérivé d'un élément choisi parmi Li, Mg, Ca, Sr, Mn, Fe, Ni, Co, Cu(I), Cu(II), Ag, Zn, Cd, Al, Sn(II), Sn(IV), Bi, Hg, Pb, Y et les terres rares.

**5.** Matériau selon l'une quelconque des revendications 1 à 4, caractérisé en ce que $Z^-$ et $Y^-$, identiques ou différents, i sont choisis parmi:

= les halogènes tels que $F^-$, $Cl^-$, $Br^-$, $I^-$;

= les pseudohalogènes répondant à la formule $QS^-$ ;

= les radicaux $R_FCO_2^-$, $(R_FCO)_2N^-$, $(R_FCO)_2CQ^-$, $R_FCOCQ_2^-$, $QCOC(CN)_2^-$,$(R_FCO)_2CSO_2R_F^-$, $(R_FCO)_2CSO_2NR_2^-$, $R\text{-}(OCH_2CH_2)_j\text{-}CH_2COC(CN)_2^-$;

= les sulfonamides $QN(SO_2R_F)^-$ ;

Q représentant CN, R, RCO, $R_2NCO$, $R_2NCS$, $R_F$, $R_FCO$ ou un hétérocycle, $R_F$ représentant un radical perhalogénoalkyle ou perhalogénoaryle, R représentant un radical alkyle, oxaalkyle ou aryle.

**6.** Matériau selon l'une quelconque des revendications 1 à 4, caractérisé en ce que Z et Y représentent, simultanément ou non, un multiradical.

**7.** Matériau selon la revendication 6, caractérisé en ce que le multiradical est un biradical représenté par la formule $-(R_FSO_2)NQ'N(SO_2R_F)-$, dans laquelle Q' représente un radical bivalent portant au moins une fonction choisie parmi CN, R, RCO, $R_2NCO$, $R_2NCS$, $R_F$, $R_FCO$ ou un hétérocycle, $R_F$ représentant un radical perhalogénoalkyle ou perhalogénoaryle, R représentant un radical alkyle, oxaalkyle ou aryle.

**8.** Matériau selon l'une quelconque des revendications 1 à 7, caractérisé en ce que l'unité de solvatation de la trame polymère contient au moins un hétéroatome choisi parmi O, N, F et S.

**9.** Matériau selon la revendication 8, caractérisé en ce que l'unité de solvatation de la trame polymère est un groupement éther ou un groupement amine.

**10.** Matériau selon la revendication 9, caractérisé en ce que la trame polymère est constituée par un homopolymère, un copolymère bloc, un copolymère statistique, un copolymère alterné ou un copolymère de structure peigne de l'oxyde d'éthylène.

**11.** Matériau selon l'une quelconque des revendications 1 à 10, caractérisé en ce qu'il contient des additifs choisis parmi les sels d'anions qui ne peuvent constituer un ligand pour l'ion $M^{n+}$ et parmi les agents plastifiants.

**12.** Procédé de préparation d'un matériau selon l'une quelconque des revendications 1 à 11, caractérisé en ce qu'un sel $AY_p$ et un sel $MZ_n$ sont dissous dans un polymère solvatant, dans des proportions telles que la relation $z + y - nx = p$ soit satisfaite et qu'elles permettent la coexistence en quantités finies, de l'anion complexe $[MZ_nY_p]^{p-}$ et d'une espèce choisie dans le groupe constitué par l'anion $Z^-$, l'anion $Y^-$, l'anion complexe $[MZ_nY_{p+1}]^{(p+1)-}$ et l'espèce neutre $MZ_n$.

**13.** Procédé selon la revendication 12, caractérisé en ce que les sels et le polymère sont dissous dans un solvant liquide commun qui est ensuite évaporé.

**14.** Procédé selon la revendication 13, caractérisé en ce que le polymère est réticulé in situ.

**15.** Procédé selon la revendication 12, caractérisé en ce que le polymère est pré-réticulé et imprégné par une solution de sel dans un solvant organique, le solvant étant éliminé après l'imprégnation.

**16.** Procédé selon la revendication 12, caractérisé en ce que les sels sont dissous dans le polymère à sec par broyage.

**17.** Générateur électrochimique, caractérisé en ce qu'il comprend comme électrolyte un matériau selon l'une quelconque des revendications 1 à 11.

**18.** Générateur selon la revendication 17, caractérisé en ce qu'il comprend une électrode négative "source" du métal M à un haut potentiel chimique, une électrode positive ou "puits" établissant un bas potentiel chimique de M, les deux électrodes étant en contact par l'intermédiaire de l'électrolyte.

19. Générateur électrochimique selon l'une des revendications 17 ou 18, caractérisé en ce qu'au moins l'une des électrodes a une structure composite incluant un matériau électrochimiquement actif, un matériau conducteur électronique et le matériau constituant l'électrolyte.

20. Système électrochimique permettant d'agir sur la transmission de la lumière comprenant une contre-électrode, un électrolyte, et une électrode transparente servant de substrat pour le dépôt électrochimique du métal M, caractérisé en ce que l'électrolyte est un matériau selon l'une quelconque des revendications 1 à 11.

21. Système électrochimique selon la revendication 20, caractérisé en ce que la contre-électrode est formée par une grille du métal M, éventuellement déposé sur un support transparent.

**Patentansprüche**

1. Ionenleitendes Material, das eine feste Lösung aus einem oder mehreren Salzen in einem Polymer umfaßt, dadurch gekennzeichnet, daß der Transport und die Mobilität eines Metallkations $M^{n+}$ mit einer Wertigkeit n durch zumindest ein komplexes Anion gewährleistet sind, das der allgemeinen Formel $[MZ_nY_p]^{p-}$ entspricht, gebildet zwischen einem anionischen Liganden $Z^-$, einem anionischen Liganden $Y^-$ und dem Kation $M^{n+}$, mit $1 \leqq n \leqq 5$ und $1 \leqq p \leqq 3$.

2. Material nach Anspruch 1, dadurch gekennzeichnet, daß die feste Lösung ein Polymerkomplex der allgemeinen Formel

$$\text{Poly(u.s.)}_u\ A(M_xZ_zY_y)$$

ist, worin
- A ein Kation mit der Wertigkeit p ist, das leicht von dem Polymer solvatisiert werden kann, wobei p = 1 oder 2;
- (u.s.) eine Polymer-Solvatationseinheit bezeichnet;
- u die Anzahl der zum Solvatisieren eines Kations A erforderlichen, vom makromolekularen Gerüst getragenen Solvatationseinheiten darstellt;
- x, y und z so sind, daß die Beziehung z + y - nx = p gilt und daß sie die Koexistenz in begrenzten Mengen des komplexen Anions $[MZ_nY_p]^{-p}$ und einer Spezies ermöglichen, die aus der Gruppe gewählt ist, die aus dem Anion $Z^-$, dem Anion $Y^-$, dem komplexen Anion $[MZ_nY_{p+1}]^{(p+1)-}$, dem komplexen Anion $[MZ_{n+1}Y_p]^{(p+1)-}$ und der neutralen Spezies $MZ_n$ ausgewählt ist.

3. Material nach Anspruch 2, dadurch gekennzeichnet, daß das Kation A aus den Alkalimetallen, den Erdalkalimetallen, den quaternären Ammoniumresten der Formel $NH_{(4-j)}R_j+$, den Amidiniumresten der Formel $RC(NH_{2-j}R_j)_2+$, den Guanidiniumresten der Formel $C(NH_{2-j}R_j)_3+$ mit j=0, 1 oder 2 ausgewählt ist, wobei R aus Wasserstoff, einer Alkyl-, Oxaalkyl- oder Arylgruppe ausgewählt ist.

4. Material nach einem der Ansprüch 1 bis 3, dadurch gekennzeichnet, daß das Kation $M^{n+}$ ein Kation ist, das von einem Element stammt, das aus Li, Mg, Ca, Sr, Mn, Fe, Ni, Co, Cu(I), Cu(II), Ag, Zn, Cd, Al, Sn(II), Sn(IV), Bi, Hg, Pb, Y und den Seltenerdmetallen ausgewählt ist.

5. Material nach einem der Ansprüche 1 bis 4, dadurch gekennzeichnet, daß $Z^-$ und $Y^-$, die identisch oder voneinander verschieden sein können, ausgewählt sind aus:
= den Halogenen, wie $F^-$, $Cl^-$, $Br^-$, $I^-$;
= den Pseudohalogenen der Formel $QS^-$;
= den Resten $R_FCO_2^-$, $(R_FCO)_2N^-$, $(R_FCO)_2CQ^-$, $R_FCOCQ_2^-$, $QCOC(CN)_2^-$, $(R_FCO)_2CSO_2R_F^-$, $(R_FCO)_2CSO_2NR_2^-$, $R\text{-}(OCH_2CH_2)_j\text{-}CH_2COC(CN)_2^-$;
= den Sulfonamiden $QN(SO_2R_F)^-$;
wobei Q CN, R, RCO, $R_2NCO$, $R_2NCS$, $R_F$, $R_FCO$ oder einen Heterozyklus darstellt, $R_F$ einen Perhalogenalkyl- oder Perhalogenarylrest darstellt, R einen Alkyl-, Oxaalkyl- oder Arylrest darstellt.

6. Material nach einem der Ansprüche 1 bis 4, dadurch gekennzeichnet, daß Z und Y, gleichzeitig oder nicht, einen Multirest darstellen.

7. Material nach Anspruch 6, dadurch gekennzeichnet, daß der Multirest ein Birest der Formel $-(R_FSO_2)$

$NQ'N(SO_2R_F)$- ist, worin Q' ein zweiwertiger Rest darstellt, der zumindest eine funktionelle Gruppe trägt, die aus CN, R, RCO, $R_2NCO$, $R_2NCS$, $R_F$, $R_FCO$ oder einem Heterozyklus gewählt ist, wobei $R_F$ einen Perhalogenalkyl- oder Perhalogenarylrest darstellt, und R einen Alkyl-, Oxaalkyl- oder Arylrest darstellt.

**8.** Material nach einem der Ansprüche 1 bis 7, dadurch gekennzeichnet, daß die Solvatisationseinheit des Polymergerüsts zumindest ein aus O, N, F und S gewähltes Heteroatom enthält.

**9.** Material nach Anspruch 8, dadurch gekennzeichnet, daß die Solvatisationseinheit des Polymergerüsts eine Ethergruppe oder eine Amingruppe ist.

**10.** Material nach Anspruch 9, dadurch gekennzeichnet, daß das Polymergerüst aus einem Homopolymer, einem Blockcopolymer, einem statistischen Copolymer, einem alternierenden Copolymer oder einem Copolymer mit Ethylenoxidrückgratstruktur besteht.

**11.** Material nach einem der Ansprüche 1 bis 10, dadurch gekennzeichnet, daß es Additive enthält, die aus Salzen von Anionen, die keinen Liganden für das $M^{n+}$-Ion darstellen können, sowie aus Plastifikatoren ausgewählt sind.

**12.** Verfahren zur Herstellung eines Materials nach einem der Ansprüche 1 bis 11, dadurch gekennzeichnet, daß ein Salz $AY_p$ und ein Salz $MZ_n$ in einem Solvatisierungspolymer in solchen Anteilen aufgelöst werden, daß die Beziehung z + y - nx = p gilt und daß sie die Koexistenz in begrenzten Mengen des komplexen Anions $[MZ_nY_p]^{-p}$ und einer Spezies ermöglichen, die aus der Gruppe gewählt ist, die aus dem Anion $Z^-$, dem Anion $Y^-$, dem komplexen Anion $[MZ_nY_{p+1}]^{(p+1)-}$, dem komplexen Anion $[MZ_{n+1}Y_p]^{(p+1)-}$ und der neutralen Spezies $MZ_n$ gebildet ist.

**13.** Verfahren nach Anspruch 12, dadurch gekennzeichnet, daß die Salze und das Polymer in einem gemeinsamen flüssigen Lösungsmittel aufgelöst werden, das daraufhin verdampft wird.

**14.** Verfahren nach Anspruch 13, dadurch gekennzeichnet, daß das Polymer in situ vernetzt wird.

**15.** Verfahren nach Anspruch 12, dadurch gekennzeichnet, daß das Polymer vorvernetzt wird und durch eine Salzlösung in einem organischen Lösungsmittel getränkt wird, wobei das Lösungsmittel nach dem Tränken eliminiert wird.

**16.** Verfahren nach Anspruch 12, dadurch gekennzeichnet, daß die Salze im Polymer im trockenen Zustand durch Feinzerkleinerung aufgelöst werden.

**17.** Elektrochemischer Generator, der dadurch gekennzeichnet ist, daß er als Elektrolyt ein Material nach einem der Ansprüche 1 bis 11 umfaßt.

**18.** Generator nach Anspruch 17, dadurch gekennzeichnet, daß er eine negative Elektrode als "Quelle" für Metall M mit hohem chemischem Potential, eine positive Elektrode oder einen "Brunnen" umfaßt, der ein niedriges chemisches Potential für M schafft, wobei die beiden Elektroden über den Elektrolyten miteinander in Kontakt stehen.

**19.** Elektrochemischer Generator nach einem der Ansprüche 17 oder 18, dadurch gekennzeichnet, daß zumindest eine der Elektroden eine Verbundstruktur aufweist, die ein elektrochemisch aktives Material, ein Elektronenleitmaterial und das den Elektrolyten darstellende Material umfaßt.

**20.** Elektrochemisches System, das ermöglicht, auf die Übertragung von Licht hin zu agieren und eine Gegenelektrode, einen Elektrolyten und eine transparente Elektrode umfaßt, die als Substrat für die elektrochemische Ablagerung von Metall M dient, dadurch gekennzeichnet, daß der Elektrolyt ein Material nach einem der Ansprüche 1 bis 11 ist.

**21.** Elektrochemisches System nach Anspruch 20, dadurch gekennzeichnet, daß die Gegenelektrode durch ein Gitter aus Metall M gebildet ist, das gegebenenfalls auf einem transparenten Träger abgelagert ist.

## Claims

1. Ionically conductive material comprising a solid solution of one or more salts in a polymer, characterized in that the transport and the mobility of a metal cation $M^{n+}$ which has the valency n are provided by at least one complex anion corresponding to the general formula $[MZ_nY_p]^{p-}$, formed between an anionic ligand $Z^-$, an anionic ligand $Y^-$ and the cation $M^{n+}$, with $1 \leqq n \leqq 5$ and $1 \leqq p \leqq 3$.

2. Material according to claim 1, characterized in that the solid solution is a polymeric complex denoted by the overall formula

$$Poly(s.u.)_u A(M_xZ_zY_y)$$

in which
- A is a cation of valency p capable of being easily solvated by the polymer, with p = 1 or 2;
- (s.u.) denotes the solvation unit of the polymer;
- u denotes the number of solvation units carried by the macromolecular framework which are needed for solvating a cation A;
- x, y and z are such that the relationship $z + y - nx = p$ is satisfied and that they permit the coexistence, in finite quantities, of the complex anion $[MZ_nY_p]^{p-}$ and of a species chosen from the group consisting of the anion $Z^-$, the anion $Y^-$, the complex anion $[MZ_nY_{p+1}]^{(p+1)-}$ , the complex anion $[MZ_{n+1}Y_p]^{(p+1)-}$ and the neutral species $MZ_n$.

3. Material according to claim 2, characterized in that the cation A is chosen from alkali metals, alkaline-earth metals, quaternary ammonium radicals corresponding to the formula $NH_{(4-j)}R_j^+$, amidinium radicals corresponding to the formula $RC(NH_{2-j}R_j)_2^+$, guanidinium radicals corresponding to the formula $C(NH_{2-j}R_j)_3^+$, with j = 0, 1 or 2, R being chosen from hydrogen and an alkyl, oxaalkyl or aryl group.

4. Material according to any one of claims 1 to 3, characterized in that the cation $M^{n+}$ is a cation derived from an element chosen from Li, Mg, Ca, Sr, Mn, Fe, Ni, Co, Cu(I), Cu(II), Ag, Zn, Cd, Al, Sn(II), Sn(IV), Bi, Hg, Pb, Y and the rare earths.

5. Material according to any one of claims 1 to 4, characterized in that $Z^-$ and $Y^-$, which are identical or different, are chosen from:
   = halogens such as $F^-$, $Cl^-$, $Br^-$, $I^-$;
   = pseudohalogens corresponding to the formula $QS^-$;
   = the radicals $R_FCO_2^-$, $(R_FCO)_2N^-$, $(R_FCO)_2CQ^-$, $R_FCOCQ_2^-$, $QCOC(CN)_2^-$, $(R_FCO)_2CSO_2R_F^-$, $(R_FCO)_2CSO_2NR_2^-$, $R\text{-}(OCH_2CH_2)_j\text{-}CH_2COC(CN)_2^-$;
   = sulfonamides $QN(SO_2R_F)^-$;
   Q denoting CN, R, RCO, $R_2NCO$, $R_2NCS$, $R_F$, $R_FCO$ or a heterocyclic ring, $R_F$ denoting a perhaloalkyl or perhaloaryl radical, R denoting an alkyl, oxaalkyl or aryl radical.

6. Material according to any one of claims 1 to 4, characterized in that Z and Y denote a multiradical, simultaneously or otherwise.

7. Material according to claim 6, characterized in that the multiradical is a biradical denoted by the formula $-(R_FSO_2)NQ'N(SO_2R_F)^-$, in which Q′ denotes a bivalent radical carrying at least one functional group chosen from CN, R, RCO, $R_2NCO$, $R_2NCS$, $R_F$, $R_FCO$ or a heterocyclic ring, $R_F$ denoting a perhaloalkyl or perhaloaryl radical, R denoting an alkyl, oxaalkyl or aryl radical.

8. Material according to any one of claims 1 to 7, characterized in that the solvation unit of the polymeric framework contains at least one heteroatom chosen from 0, N, F and S.

9. Material according to claim 8, characterized in that the solvation unit of the polymeric framework is an ether group or an amine group.

10. Material according to claim 9, characterized in that the polymeric framework consists of a homopolymer, a block copolymer, a random copolymer, an alternating copolymer or an ethylene oxide copolymer with a comb structure.

11. Material according to any one of claims 1 to 10, characterized in that it contains additives chosen from

salts of anions which cannot form a ligand for the ion $M^{n+}$ and from plasticizing agents.

12. Process for the preparation of a material according to any one of claims 1 to 11, characterized in that a salt $AY_p$ and a salt $MZ_n$ are dissolved in a solvating polymer, in proportions such that the relationship z + y - nx = p is satisfied and that they permit the coexistence, in finite quantities, of the complex anion $[MZ_nY_p]^{p-}$ and of a species chosen from the group consisting of the anion $Z^-$, the anion $Y^-$, the complex anion $[MZ_nY_{p+1}]^{(p+1)-}$ and the neutral species $MZ_n$.

13. Process according to claim 12, characterized in that the salts and the polymer are dissolved in a common liquid solvent which is then evaporated.

14. Process according to claim 13, characterized in that the polymer is crosslinked in situ.

15. Process according to claim 12, characterized in that the polymer is precrosslinked and impregnated with a solution of salt in an organic solvent, this solvent being removed after the impregnation.

16. Process according to claim 12, characterized in that the salts are dissolved in the polymer in dry state by grinding.

17. Electrochemical generator, characterized in that it comprises as electrolyte a material according to any one of claims 1 to 11.

18. Generator according to claim 17, characterized in that it comprises a negative electrode which is a source of metal M with a high chemical potential, a positive electrode or "well" establishing a low chemical potential of M, the two electrodes being in contact through the intermediacy of the electrolyte.

19. Electrochemical generator according to either of claims 17 and 18, characterized in that at least one of the electrodes has a composite structure including an electrochemically active material, an electronically conductive material and the material forming the electrolyte.

20. Electrochemical system which makes it possible to affect the transmission of light, comprising a counterelectrode, an electrolyte, and a transparent electrode used as substrate for the electrochemical deposition of the metal M, characterized in that the electrolyte is a material according to any one of claims 1 to 11.

21. Electrochemical system according to claim 20, characterized in that the counterelectrode consists of a grid of the metal M, optionally deposited on a transparent support.

fig. 1

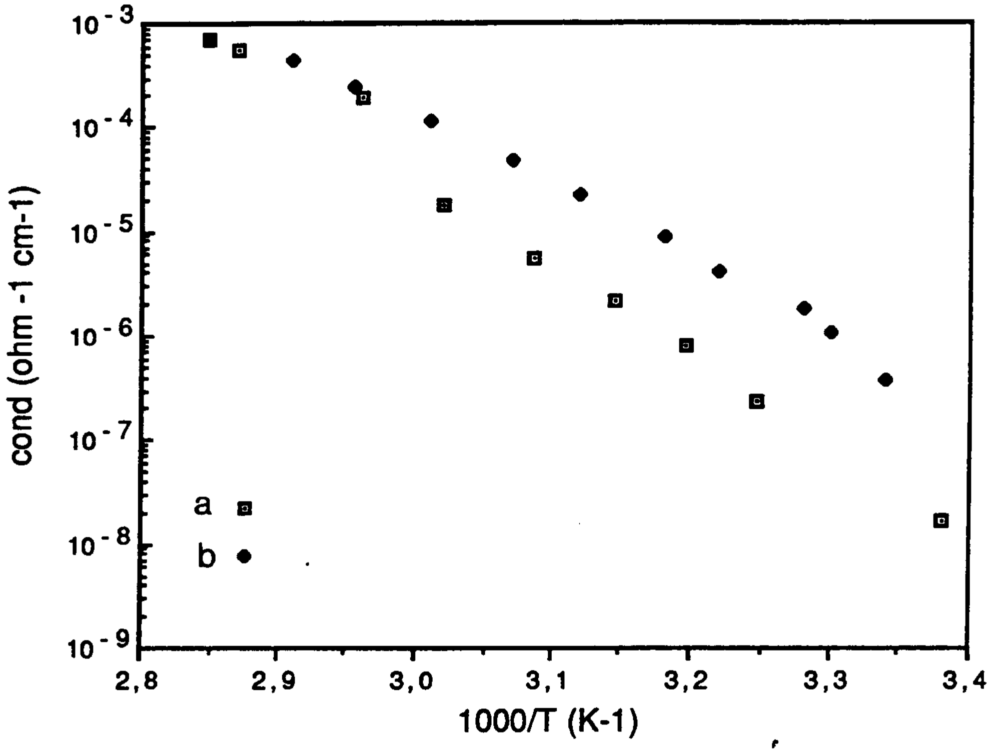
10-3
10-4
10-5
10-6
10-7
10-8
10-9
cond (ohm -1 cm-1)
a
b
2,8
2,9
3,0
3,1
3,2
3,3
3,4
1000/T (K-1)

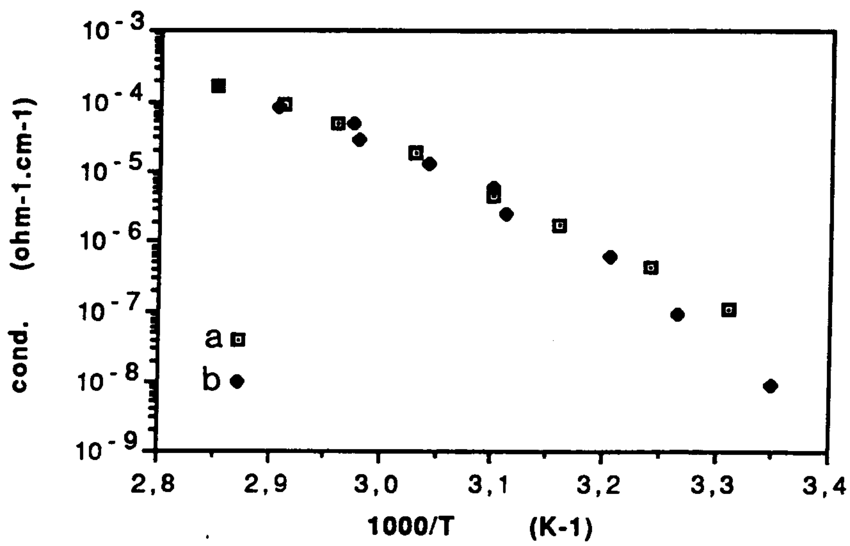
10-3
10-4
10-5
10-6
10-7
10-8
10-9
cond. (ohm-1.cm-1)
a
b
2,8
2,9
3,0
3,1
3,2
3,3
3,4
1000/T (K-1)

fig. 2